# EUROPEAN PATENT APPLICATION

(11) **EP 4 554 263 A1**
(43) Date of publication of application: **14.05.2025**
(21) Application number: 23834947.6
(22) Date of filing: 07.07.2023
(51) Int. Cl.: H04W 8/02

(54) **INFORMATION PROCESSING METHODS, APPARATUS, COMMUNICATION DEVICE AND READABLE STORAGE MEDIUM**

(30) Priority: 08.07.2022 CN 202210806412
(71) Applicant: Vivo Mobile Communication Co., Ltd., Dongguan, Guangdong 523863 (CN)
(72) Inventor: ZHANG, Yizhong, Dongguan, Guangdong 523863 (CN); KE, Xiaowan, Dongguan, Guangdong 523863 (CN); LV, Huazhang, Dongguan, Guangdong 523863 (CN)
(74) Representative: Lavoix
(86) International application number: PCT/CN2023/106310
(87) International publication number: WO 2024/008182

(57) **Abstract**

This application discloses an information processing method and apparatus, a communication device, and a readable storage medium, and pertains to the field of communication technologies. The information processing method in embodiments of this application includes: obtaining, by a first communication device, a request message; and performing, based on the request message, a first operation corresponding to an association. The request message includes at least one of the following: a first request message related to a first association; a second request message related to a second association; and a third request message related to a third association. The first association is established before a terminal returns from a first network to a second network, and is used for obtaining terminal policy information in the second network. The second association is established after the terminal returns from the first network to the second network, and is used for obtaining terminal policy information in the second network. The third association is established before the terminal returns from the first network to the second network, and is used for obtaining terminal policy information in the first network. The first network and the second network are networks with different access modes.

## Description

### CROSS-REFERENCE TO RELATED APPLICATIONS

This application claims priority to Chinese Patent Application No. 202210806412.9, filed in China on July 8, 2022, which is incorporated herein by reference in its entirety.

### TECHNICAL FIELD

This application pertains to the field of communication technologies, and specifically, relates to an information processing method and apparatus, a communication device, and a readable storage medium.

### BACKGROUND

In the related art, a terminal policy association (UE policy association) may be established for a terminal to enable the terminal to obtain a terminal route selection policy (UE Route Selection Policy, URSP). The association is used for the terminal to obtain terminal policy information in a corresponding network. In different networks, different terminal policy associations can be established for the terminal to obtain terminal policy information in different networks. Therefore, how to deal with a plurality of terminal policy associations is an issue that urgently needs to be addressed currently.

### SUMMARY

Embodiments of this application provide an information processing method and apparatus, a communication device, and a readable storage medium, to resolve a problem that a plurality of terminal policy associations exist.

According to a first aspect, an information processing method is provided, including:
obtaining, by a first communication device, a request message; and
performing, by the first communication device based on the request message, a first operation corresponding to an association, where
the request message includes at least one of the following:
   a first request message related to a first association;
   a second request message related to a second association; and
   a third request message related to a third association, where
   the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

According to a second aspect, an information processing method is provided, including:
in a case that a first condition is met, deleting, by a second communication device, a third association, where
the first condition includes at least one of the following:
   a terminal returns from a first network to a second network;
   a third communication device triggers a session establishment procedure;
   the third communication device triggers a session modification procedure;
   a session context setup request is obtained;
   first indication information is received, where the first indication information is used for indicating the terminal to perform an N26 interface-based handover procedure;
   a fourth request message is received, where the fourth request message is used for requesting the second communication device to delete the third association, or set the third association to an inactive state; and
   first notification information is received, where the first notification information is used for indicating the second communication device to delete the third association, or set the third association to an inactive state, where
   the third association is established before the terminal returns from the first network to the second network, and is used for obtaining terminal policy information in the first network, and the first network and the second network are networks with different access modes.

According to a third aspect, an information processing method is provided, including:
performing, by a third communication device, a second operation, where
the second operation includes at least one of the following:
   sending a first request message, where the first request message is used for requesting at least one of the following: restoring a first association from an inactive state to an active state, or establishing or modifying a first association;
   sending a second request message, where the second request message is used for requesting to establish or modify a second association;
   sending a third request message, where the third request message is used for requesting to delete a third association; and
   sending second notification information, where the second notification information is used for indicating at least one of the following: a terminal has registered with a second network or deleted the first association, where
   the first association is established before the terminal returns from a first network to the second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

According to a fourth aspect, an information processing method is provided, including:
receiving, by a fourth communication device, second notification information, where the second notification information is used for indicating at least one of the following: a terminal has registered with a second network or deleted a first association, where the first association is established before the terminal returns from a first network to the second network, and is used for obtaining terminal policy information in the second network, and the first network and the second network are networks with different access modes; and
deleting, by the fourth communication device, the first association.

According to a fifth aspect, an information processing apparatus is provided, including:
an obtaining module, configured to obtain a request message; and
a first execution module, configured to perform, based on the request message, a first operation corresponding to an association, where
the request message includes at least one of the following:
   a first request message related to a first association;
   a second request message related to a second association; and
   a third request message related to a third association, where
   the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

According to a sixth aspect, an information processing apparatus is provided, including:
a second execution module, configured to delete a third association in a case that a first condition is met, where
the first condition includes at least one of the following:
   a terminal returns from a first network to a second network;
   a third communication device triggers a session establishment procedure;
   the third communication device triggers a session modification procedure;
   a session context setup request is obtained;
   first indication information is received, where the first indication information is used for indicating the terminal to perform an N26 interface-based handover procedure;
   a fourth request message is received, where the fourth request message is used for requesting the second communication device to delete the third association, or set the third association to an inactive state; and
   first notification information is received, where the first notification information is used for indicating the second communication device to delete the third association, or set the third association to an inactive state, where
   the third association is established before the terminal returns from the first network to the second network, and is used for obtaining terminal policy information in the first network, and the first network and the second network are networks with different access modes.

According to a seventh aspect, an information processing apparatus is provided, including:
a third execution module, configured to perform a second operation, where
the second operation includes at least one of the following:
   sending a first request message, where the first request message is used for requesting at least one of the following: restoring a first association from an inactive state to an active state, or establishing or modifying a first association;
   sending a second request message, where the second request message is used for requesting to establish or modify a second association;
   sending a third request message, where the third request message is used for requesting to delete a third association; and
   sending second notification information, where the second notification information is used for indicating at least one of the following: a terminal has registered with a second network or deleted the first association, where
   the first association is established before the terminal returns from a first network to the second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

According to an eighth aspect, an information processing apparatus is provided, including:
a receiving module, configured to receive second notification information, where the second notification information is used for indicating at least one of the following: a terminal has registered with a second network or deleted a first association, where the first association is established before the terminal returns from a first network to the second network, and is used for obtaining terminal policy information in the second network, and the first network and the second network are networks with different access modes; and
a fourth execution module, configured to delete the first association.

According to a ninth aspect, a communication device is provided, including a processor and a memory, where the memory stores a program or instructions capable of running on the processor, and when the program or instructions are executed by the processor, the steps of the method according to the first aspect are implemented, or the steps of the method according to the second aspect are implemented, or the steps of the method according to the third aspect are implemented, or the steps of the method according to the fourth aspect are implemented.

According to a tenth aspect, a communication system is provided, including at least two of the following: a first communication device, a second communication device, a third communication device, and a fourth communication device. The first communication device may be configured to perform the steps of the method according to the first aspect. The second communication device may be configured to perform the steps of the method according to the second aspect. The third communication device may be configured to perform the steps of the method according to the third aspect. The fourth communication device may be configured to perform the steps of the method according to the fourth aspect.

According to an eleventh aspect, a readable storage medium is provided, where the readable storage medium stores a program or instructions, and when the program or instructions are executed by a processor, the steps of the method according to the first aspect are implemented, or the steps of the method according to the second aspect are implemented, or the steps of the method according to the third aspect are implemented, or the steps of the method according to the fourth aspect are implemented.

According to a twelfth aspect, a chip is provided, where the chip includes a processor and a communication interface, the communication interface is coupled to the processor, and the processor is configured to run a program or instructions to implement the steps of the method according to the first aspect, or implement the steps of the method according to the second aspect, or implement the steps of the method according to the third aspect, or implement the steps of the method according to the fourth aspect.

According to a thirteenth aspect, a computer program product or program product is provided, where the computer program or program product is stored in a storage medium, and the computer program or program product is executed by at least one processor to implement the steps of the method according to the first aspect, or implement the steps of the method according to the second aspect, or implement the steps of the method according to the third aspect, or implement the steps of the method according to the fourth aspect.

In the embodiments of this application, a request message is obtained, where the request message includes at least one of the following: a first request message related to a first association, a second request message related to a second association, and a third request message related to a third association; and a first operation corresponding to an association is performed. This can resolve a problem that a plurality of terminal policy associations exist, to ensure normal communication of a terminal.

### BRIEF DESCRIPTION OF DRAWINGS

FIG. 1 is a block diagram of a wireless communication system to which embodiments of this application are applicable;
FIG. 2 is a flowchart of an information processing method according to an embodiment of this application;
FIG. 3 is a flowchart of another information processing method according to an embodiment of this application;
FIG. 4 is a flowchart of another information processing method according to an embodiment of this application;
FIG. 5 is a flowchart of another information processing method according to an embodiment of this application;
FIG. 6 is a schematic diagram of an association processing procedure according to Example 1 of this application;
FIG. 7 is a schematic diagram of an association processing procedure according to Example 2 of this application;
FIG. 8 is a schematic diagram of an association processing procedure according to Example 3 of this application;
FIG. 9 is a schematic diagram of an association processing procedure according to Example 4 of this application;
FIG. 10 is a schematic structural diagram of an information processing apparatus according to an embodiment of this application;
FIG. 11 is a schematic structural diagram of another information processing apparatus according to an embodiment of this application;
FIG. 12 is a schematic structural diagram of another information processing apparatus according to an embodiment of this application;
FIG. 13 is a schematic structural diagram of another information processing apparatus according to an embodiment of this application;
FIG. 14 is a schematic structural diagram of a communication device according to an embodiment of this application; and
FIG. 15 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit the number of objects. For example, there may be one or more first objects. In addition, in this specification and the claims, "and/or" indicates at least one of connected objects, and the character "/" generally indicates an "or" relationship between contextually associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

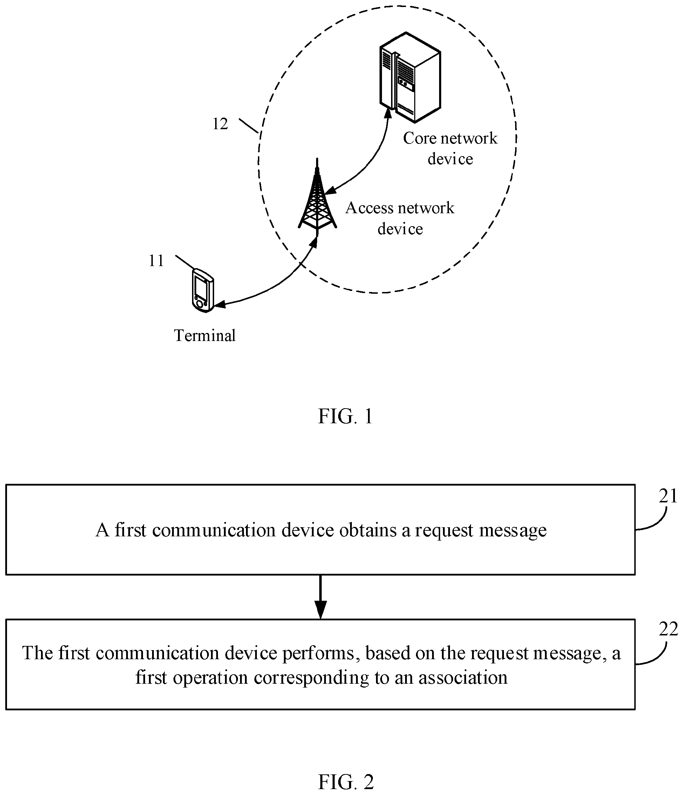

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), an access and mobility management PCF (Access and Mobility Management PCF, AM-PCF), a session management PCF (Session Management PCF, SM-PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in the embodiments of this application, but a specific type of the core network device is not limited.

For ease of understanding the embodiments of this application, the following content is first described.

Terminal route selection policy (UE Route Selection Policy, URSP) rules (rules) are policies defined by a protocol for performing sending to a terminal, for example, user equipment (User Equipment, UE). According to the URSP rules, the terminal may match traffic of an application (APP) to a specific protocol data unit (Protocol Data Unit, PDU) session (session). The URSP rules are mainly used for the terminal to establish a PDU session to a data network name (Data Network Name, DNN) or an access point name (Access Point Name, APN).

For example, for applications (Application, APP) on the terminal, when the APPs have traffic (traffic) to be sent to a server, traffic features of the APPs may be sent to the terminal. The traffic features belong to a variety of types, for example, including a destination IP address and a fully qualified domain name (Fully Qualified Domain Name, FQDN). Then the terminal performs matching against the URSP rules on the terminal one by one based on the traffic features of the APPs. If there are URSP rules matching the traffic features of the APPs, a next step is to select a specific PDU session for sending the traffic of the APPs.

The URSP rules are a concept introduced in a 5G system, and are mainly used for a terminal to establish a PDU session to a specific DNN or APN. For example, in a 5G network, after a terminal sends a registration request to an AMF, the AMF may select an AM-PCF for the terminal, and trigger establishment of a terminal policy association (UE policy association) for the terminal. The association may be identified by a terminal policy association identifier (UE policy association ID), and is an association between the AMF and the AM-PCF. Then the AM-PCF provides URSP rules for the terminal based on the association. To be specific, the UE policy association is an association established upon triggering by the AMF to provide URSP rules for the terminal. A UE policy association of each terminal has an association ID identifier, namely, a UE policy association ID. Each terminal has an AM-PCF for providing a policy for the terminal. The association ID (namely, the UE policy association ID) is generated by the AM-PCF. In the 5G system, to send a policy to each terminal, a UE policy association needs to be established for each terminal.

However, there is no concept of URSP rules in a 4G system. However, currently, a terminal may map, according to URSP rules, some parameters in the URSP rules to 4G according to some mapping rules, for the terminal to establish a connection to a specific APN. For example, after receiving URSP rules, the terminal may map or convert a DNN in the URSP rules to an APN according to some mapping rules, and then establish a packet data network (Packet Data Networks, PDN) connection to the APN. Therefore, the terminal also needs to obtain URSP rules in 4G.

To enable a terminal to obtain URSP rules in a 4G network, after the terminal enters the 4G network, the terminal may still use the AM-PCF in the 5G network to establish a new UE policy association, where the association is used for providing URSP rules in the 4G network. Specifically, after the terminal enters the 4G network, the AMF needs to send index information of the AM-PCF to an MME. In this case, the MME learns of an AMF ID and an AM-PCF ID. Then, when establishing a session, the MME enables an SM-PCF and the AM-PCF to establish a new UE policy association to provide URSP rules in the 4G network.

In this case, at least the following cases exist:
(1) After the terminal enters the 4G network, because the terminal is no longer in the 5G network, a problem of deregistration may occur. To be specific, after the terminal enters the 4G network and initiates a tracking area update (Tracking Area Update, TAU), the terminal may deregister from the 5G system. A result of the deregistration is that the UE policy association may be released or deleted and a terminal context (including a terminal policy context (UE policy context)) is also deleted. Then, if there is no UE policy association and no terminal context, the AM-PCF cannot provide policies for the terminal.
(2) After the terminal enters the 4G network, the terminal is not triggered to deregister from the 5G system. In other words, the UE policy association still exists.

Therefore, key points for the terminal to obtain a UE policy in the 4G network are as follows: First, the terminal needs to establish an association in an evolved packet system (Evolved Packet System, EPS) to obtain a 5GS UE policy in the EPS. Second, a UE context cannot be released, so that smooth distribution of a policy can be ensured.

In addition, if the terminal returns from the 4G network to the 5G network, the terminal needs to perform terminal registration with the 5G system again. A terminal registration procedure further involves establishment (establishment) of a UE policy association. The association establishment procedure is also accompanied by AMF selection and AM-PCF selection. If the terminal selects a different AM-PCF and establishes a new UE policy association after returning to the 5G network and an old UE policy association for providing policies in the 4G network is not released, a problem that one terminal has two or more UE policy associations occurs. Therefore, how to deal with a plurality of terminal policy associations is a problem that urgently needs to be resolved currently.

An N26 interface is an interface that supports signaling interaction between an MME and an AMF. If the N26 interface is not supported, the MME and the AMF cannot communicate with each other.

The following describes in detail an information processing method and apparatus, a communication device, and a readable storage medium provided in the embodiments of this application with reference to the accompanying drawings and by using some embodiments and application scenarios thereof.

FIG. 2 is a flowchart of an information processing method according to an embodiment of this application. The method is applied to a first communication device. For example, the first communication device is a network-side device, including but not limited to an AM-PCF and the like. For example, the AM-PCF is an old (old) AM-PCF or a new (new) AM-PCF. The old AM-PCF and the new AM-PCF may be the same or different. The old AM-PCF may be understood as an AM-PCF used before a terminal returns to a second network. The new AM-PCF may be understood as an AM-PCF used after the terminal returns to the second network.

As shown in FIG. 2, the method includes the following steps:
Step 21: The first communication device obtains a request message.
Step 22: The first communication device performs, based on the request message, a first operation corresponding to an association.

In this embodiment, the request message may include at least one of the following:
a first request message related to a first association, where for example, the first request message is used for requesting at least one of the following: restoring a first association from an inactive state to an active state, or establishing or modifying a first association;
a second request message related to a second association, where for example, the second request message is used for requesting to establish or modify a second association; and
a third request message related to a third association, where for example, the third request message is used for requesting to delete a third association.

The first association is established before the terminal returns from a first network to the second network, and is used for obtaining terminal policy information in the second network, for example, is used for the terminal to obtain terminal policy information in the second network. The second association is established after the terminal returns from the first network to the second network, and is used for obtaining terminal policy information in the second network, for example, is used for the terminal to obtain terminal policy information in the second network. The third association is established before the terminal returns from the first network to the second network, and is used for obtaining terminal policy information in the first network, for example, is used for the terminal to obtain terminal policy information in the first network.

In some embodiments, the first communication device performs the first operation corresponding to the association, where the association herein may be any one or more of the first association, the second association, the third association, and a fourth association.

In this embodiment of this application, a form of the association may include a direct association or an indirect association. For example, association may be performed through table mapping; or association may be performed in other manners, for example, by using indication information, an indicator field, an identifier, or a sequence number (index); or certainly, association may be performed in other manners, for example, by using an algorithm or a formula (for example, an input item is associated with an output item).

In some embodiments, the first association is an association between an old AMF and the old AM-PCF (for example, a UE policy association). The old AMF may be understood as an AMF used before the terminal returns to the second network.

In some embodiments, the second association is an association between a new AMF and the new AM-PCF (for example, a UE policy association). The new AMF may be understood as an AMF used after the terminal returns to the second network.

In some embodiments, the third association is an association between an SM-PCF and an old AM-PCF (for example, a UE policy association).

In some embodiments, the first communication device (for example, an AM-PCF) may receive at least one of a first request message, a second request message, and a third request message sent by a third communication device (for example, an AMF).

It should be noted that the first network and the second network are networks with different access modes. This may also be understood as that the first network and the second network are networks with different radio access technologies (Radio Access Technology, RAT). For example, the first network is a 4G network, and the second network is a 5G network. However, the first network and the second network are not specifically limited in this embodiment, and specific forms of the first network and the second network can be set provided that a corresponding condition is met.

During information processing in this embodiment of this application, a request message is obtained, where the request message includes at least one of the following: a first request message related to a first association, a second request message related to a second association, and a third request message related to a third association; and a first operation corresponding to an association is performed. This can resolve a problem that a plurality of terminal policy associations exist, to ensure normal communication of a terminal.

Optionally, in a case that the request message includes the first request message, the first operation may include at least one of the following:
setting the first association to an active state, so that the first association can be set to an available state;
accepting establishment or modification of the first association;
deleting the first association, or setting the first association to an inactive state, where the deleting the first association may be understood as releasing the first association, and the setting the first association to an inactive state is intended to retain the first association, so that the terminal can use the first association after subsequently returning to the second network, to be specific, activate the first association for use;
sending a fourth request message, where the fourth request message is used for requesting a second communication device to delete the third association, or set the third association to an inactive state, to release an association in the first network, so that only an association in the second network is in an available state; and
sending a first response message, where the first response message is used for returning a result for a request for deleting the first association, in other words, is a response message for the first request message.

Optionally, in a case that the request message includes the second request message, the first operation may include at least one of the following:
setting an established second association to an active state, so that the second association can be set to an available state;
accepting establishment or modification of the second association; and
sending a fourth request message, where the fourth request message is used for requesting a second communication device to delete the third association, or set the third association to an inactive state, to release an association in the first network, so that only an association in the second network is in an available state.

Optionally, in a case that the request message includes the third request message, the first operation may include at least one of the following:
deleting the third association, or setting the third association to an inactive state, where the deleting the third association may be understood as releasing the third association, and the setting the third association to an inactive state is intended to retain the third association, so that the terminal can use the third association after subsequently returning to the first network, to be specific, activate the third association for use;
sending a second response message, where the second response message is used for returning a result for a request for deleting the third association, in other words, is a response message for the third request message; and
sending a fourth request message, where the fourth request message is used for requesting a second communication device to delete the third association, or set the third association to an inactive state, to release an association in the first network, so that only an association in the second network is in an available state.

In some embodiments, the second communication device is the SM-PCF. For example, the old AM-PCF may send the fourth request message to the SM-PCF to request the SM-PCF to delete the third association, or set the third association to an inactive state.

In this embodiment of this application, based on whether the first communication device remains the same before and after the terminal returns from the first network to the second network, the first operation corresponding to the association may be performed based on different cases. Optionally, the first communication device is the same as a fifth communication device, the first communication device is a device used before the terminal returns from the first network to the second network, and the fifth communication device is a device used after the terminal returns from the first network to the second network. To be specific, the first communication device remains the same before and after the terminal returns from the first network to the second network, and a third communication device associated with the first communication device remains the same before and after the terminal returns from the first network to the second network (for example, before the terminal returns from the first network to the second network, a communication device associated with the first communication device is a communication device A, and after the terminal returns from the first network to the second network, a communication device associated with the first communication device is still the communication device A). In this case, the first communication device may perform at least one of the following:
setting the first association to an active state, and/or accepting establishment or modification of the first association; and
sending a fourth request message, where the fourth request message is used for requesting a second communication device to delete the third association, or set the third association to an inactive state, so that only an association in the second network is in an available state.

This can ensure that one terminal has only one association for providing terminal policy information, to resolve a problem that a plurality of terminal policy associations exist.

It should be noted that, that the first communication device remains the same before and after the terminal returns from the first network to the second network may be understood as that the first communication device is not reselected or replaced after the terminal returns from the first network to the second network. For example, the old AM-PCF is the same as the new AM-PCF. That the third communication device remains the same before and after the terminal returns from the first network to the second network may be understood as that the third communication device is not reselected or replaced after the terminal returns from the first network to the second network. For example, the old AMF is the same as the new AMF. In this case, because neither the first communication device nor the third communication device is reselected or replaced, no association needs to be reestablished between the first communication device and the third communication device after the terminal returns to the second network. For example, the first association is set to an active state, so that the first association can be used for providing terminal policy information in the second network.

Optionally, the first communication device is the same as a fifth communication device, the first communication device is a device used before the terminal returns from the first network to the second network, and the fifth communication device is a device used after the terminal returns from the first network to the second network. To be specific, the first communication device remains the same before and after the terminal returns from the first network to the second network, and a third communication device associated with the first communication device varies before and after the terminal returns from the first network to the second network (for example, before the terminal returns from the first network to the second network, a communication device associated with the first communication device is a communication device A, and after the terminal returns from the first network to the second network, a communication device associated with the first communication device is a communication device B). In this case, the first communication device may perform at least one of the following:
deleting the first association, or setting the first association to an inactive state;
setting an established second association to an active state, and/or accepting establishment or modification of the second association; and
sending a fourth request message, where the fourth request message is used for requesting a second communication device to delete the third association, or set the third association to an inactive state, so that only an association in the second network is in an available state.

This can ensure that one terminal has only one association for providing terminal policy information, to resolve a problem that a plurality of terminal policy associations exist.

It should be noted that, that the first communication device remains the same before and after the terminal returns from the first network to the second network may be understood as that the first communication device is not reselected or replaced after the terminal returns from the first network to the second network. For example, the old AM-PCF is the same as the new AM-PCF. That the third communication device varies before and after the terminal returns from the first network to the second network may be understood as that the third communication device is reselected or replaced after the terminal returns from the first network to the second network. For example, the old AMF is different from the new AMF. In this case, because the third communication device is reselected, the second association needs to be established for providing terminal policy information in the second network.

Optionally, the first communication device is different from a sixth communication device, the first communication device is a device used before the terminal returns from the first network to the second network, and the sixth communication device is a device used after the terminal returns from the first network to the second network. To be specific, the first communication device varies before and after the terminal returns from the first network to the second network. In this case, the first communication device may perform at least one of the following:
deleting the first association, or setting the first association to an inactive state; and
sending a fourth request message, where the fourth request message is used for requesting a second communication device to delete the third association, or set the third association to an inactive state, so that only an association in the second network is in an available state.

It should be noted that, that the first communication device varies before and after the terminal returns from the first network to the second network may be understood as that the first communication device is reselected or replaced after the terminal returns from the first network to the second network. To be specific, the old AM-PCF is different from the new AM-PCF. In this case, a device used before the reselection, for example, the old AM-PCF, may delete the first association, or set the first association to an inactive state, so that the established second association is used for providing terminal policy information in the second network. After the terminal returns from the first network to the second network, a third communication device (for example, an AMF) associated with the first communication device may or may not be reselected.

Optionally, the first communication device is different from a sixth communication device, the first communication device is a device used after the terminal returns from the first network to the second network, and the sixth communication device is a device used before the terminal returns from the first network to the second network. To be specific, the first communication device varies before and after the terminal returns from the first network to the second network. In this case, the first communication device may perform the following content:
setting an established second association to an active state, and/or accepting establishment or modification of the second association, to use the established second association for providing terminal policy information in the second network.

It should be noted that, that the first communication device varies before and after the terminal returns from the first network to the second network may be understood as that the first communication device is reselected or replaced after the terminal returns from the first network to the second network. To be specific, the old AM-PCF is different from the new AM-PCF. In this case, a device used after the reselection, for example, the new AM-PCF, may set the established second association to an active state, and/or accept establishment or modification of the second association. After the terminal returns from the first network to the second network, a third communication device (for example, an AMF) associated with the first communication device may or may not be reselected.

Optionally, in this embodiment, a first terminal policy information identifier (for example, a UE policy association ID) used before the terminal returns from the first network to the second network is the same as a second terminal policy information identifier (for example, a UE policy association ID) used after the terminal returns from the first network to the second network.

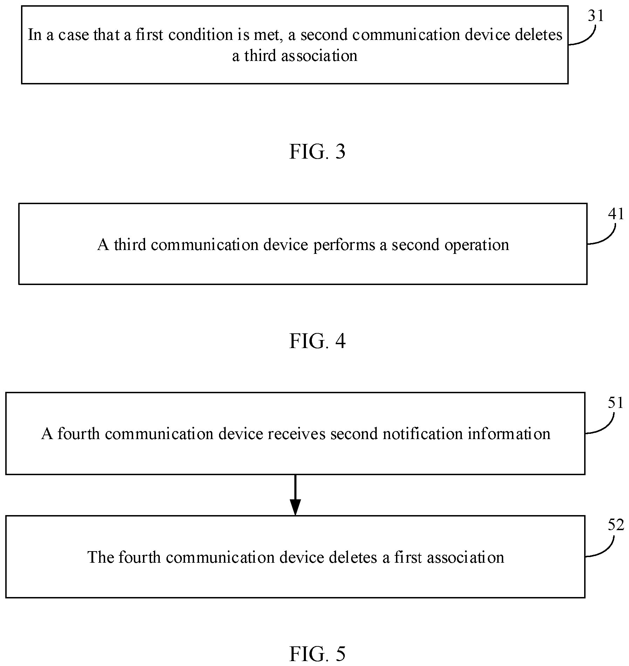

FIG. 3 is a flowchart of an information processing method according to an embodiment of this application. The method is applied to a second communication device. For example, the second communication device is a network-side device, including but not limited to an SM-PCF and the like. As shown in FIG. 3, the method includes the following step:
Step 31: In a case that a first condition is met, the second communication device deletes a third association.

In this embodiment, the deleting a third association may be understood as releasing the third association. The first condition may include at least one of the following:
the terminal returns from the first network to the second network, for example, the second communication device may obtain indication information from an AMF, and the indication information indicates the terminal to return from the first network to the second network;
a third communication device (for example, the AMF) triggers a session establishment procedure, where this is to establish a session for the same terminal, and the session is, for example, a protocol data unit (Protocol Data Unit, PDU) session;
the third communication device triggers a session modification procedure, where this is to modify a session for the same terminal, and the session is, for example, a PDU session;
a session context setup request is obtained;
first indication information is received, where the first indication information is used for indicating the terminal to perform an N26 interface-based handover procedure;
a fourth request message is received, where the fourth request message is used for requesting the second communication device (for example, an SM-AMF) to delete the third association, or set the third association to an inactive state, for example, the fourth request message may be received from the first communication device, for example, the AM-PCF; and
first notification information is received, where the first notification information is used for indicating the second communication device (for example, an SM-AMF) to delete the third association, or set the third association to an inactive state, for example, the first notification information may be received from an SMF, an SMF+PGW-C, a UDM, or an MME, to delete the third association or set the third association to the inactive state.

The third association is established before the terminal returns from the first network to the second network, and is used for obtaining terminal policy information in the first network, for example, is used for the terminal to obtain terminal policy information in the first network.

It should be noted that the first network and the second network are networks with different access modes. This may also be understood as that the first network and the second network are networks with different radio access technologies (Radio Access Technology, RAT). For example, the first network is a 4G network, and the second network is a 5G network. However, the first network and the second network are not specifically limited in this embodiment, and specific forms of the first network and the second network can be set provided that a corresponding condition is met.

In this way, the association in the first network can be released by deleting the third association, so that only the association in the second network is in the available state. This resolves a problem that a plurality of terminal policy associations exist.

In some embodiments, during an N26 interface-based handover, the AMF triggers a PDU session establishment or modification procedure. In this case, the SMF+PGW-C can learn that the terminal has returned to the second network (for example, 5G) and deletion of the third association can be triggered subsequently.

Optionally, the deleting a third association may include: sending, by the second communication device, a third request message to the first communication device, where the third request message is used for requesting to delete the third association; and then receiving a second response message sent by the first communication device, where the second response message is used for returning a result for the request for deleting the third association.

FIG. 4 is a flowchart of an information processing method according to an embodiment of this application. The method is applied to a third communication device. For example, the third communication device is a network-side device, including but not limited to an AMF and the like. For example, the AMF is a new AMF, and the new AMF may be the same as or different from an old AMF. The new AMF may be understood as an AMF used after a terminal returns to a second network. The old AMF may be understood as an AMF used before the terminal returns to the second network.

As shown in FIG. 4, the method includes the following step:

Step 41: The third communication device performs a second operation.

In this embodiment, the second operation may include at least one of the following:
sending a first request message, where the first request message is used for requesting at least one of the following: restoring a first association from an inactive state to an active state, or establishing or modifying a first association;
sending a second request message, where the second request message is used for requesting to establish or modify a second association;
sending a third request message, where the third request message is used for requesting to delete a third association, to release an association in a first network, so that only an association in the second network is in an available state; and
sending second notification information, where the second notification information is used for indicating at least one of the following: the terminal has registered with the second network or deleted the first association.

The first association is established before the terminal returns from the first network to the second network, and is used for obtaining terminal policy information in the second network, for example, is used for the terminal to obtain terminal policy information in the second network. The second association is established after the terminal returns from the first network to the second network, and is used for obtaining terminal policy information in the second network, for example, is used for the terminal to obtain terminal policy information in the second network. The third association is established before the terminal returns from the first network to the second network, and is used for obtaining terminal policy information in the first network, for example, is used for the terminal to obtain terminal policy information in the first network.

In some embodiments, the first association is an association between the old AMF and an old AM-PCF (for example, a UE policy association).

In some embodiments, the second association is an association between the new AMF and a new AM-PCF (for example, a UE policy association).

In some embodiments, the third association is an association between an SM-PCF and an old AM-PCF (for example, a UE policy association).

In some embodiments, the third communication device (for example, an AMF) may send at least one of the first request message, the second request message, and the third request message to a first communication device (for example, an AM-PCF).

In some embodiments, when the third communication device is the new AMF, the third communication device may send the second notification information to a fourth communication device, for example, the old AMF, to indicate that the terminal has registered with the second network or deleted the first association, to trigger the old AMF to delete the first association.

It should be noted that the first network and the second network are networks with different access modes. This may also be understood as that the first network and the second network are networks with different RATs. For example, the first network is a 4G network, and the second network is a 5G network. However, the first network and the second network are not specifically limited in this embodiment, and specific forms of the first network and the second network can be set provided that a corresponding condition is met.

In this way, the association in the first network can be released through the second operation, so that only the association in the second network is in the available state. This resolves a problem that a plurality of terminal policy associations exist.

In this embodiment of this application, based on whether the third communication device remains the same before and after the terminal returns from the first network to the second network, the second operation may be performed based on different cases. Optionally, the third communication device is the same as an eighth communication device, the third communication device is a device used before the terminal returns from the first network to the second network, and the eighth communication device is a device used after the terminal returns from the first network to the second network. To be specific, the third communication device remains the same before and after the terminal returns from the first network to the second network. In this case, the third communication device may perform at least one of the following:
sending the first request message;
sending the second request message; and
sending the third request message.

It should be noted that, that the third communication device remains the same before and after the terminal returns from the first network to the second network may be understood as that the third communication device is not reselected or replaced after the terminal returns from the first network to the second network. For example, the old AMF is the same as the new AMF. In this case, the AMF may initiate a request, and the AM-PCF performs a corresponding first operation.

Optionally, the third communication device is different from a fourth communication device, the third communication device is a device used before the terminal returns from the first network to the second network, and the fourth communication device is a device used after the terminal returns from the first network to the second network. To be specific, the third communication device varies before and after the terminal returns from the first network to the second network. In this case, the third communication device may send the second notification information to the fourth communication device, where the second notification information is used for indicating at least one of the following: the terminal has registered with the second network or deleted the first association.

It should be noted that, that the third communication device varies before and after the terminal returns from the first network to the second network may be understood as that the third communication device is reselected or replaced after the terminal returns from the first network to the second network. For example, the old AMF is different from the new AMF. In this case, the new AMF may send the second notification information to the old AMF to indicate that the terminal has registered in the second network and/or deleted the first association.

Optionally, before performing the second operation, the third communication device may obtain first information, where the first information includes at least one of the following: an identifier of the first communication device, address information of the first communication device, and a terminal policy information identifier. In this way, whether the first communication device is reselected can be determined based on the first information, for example, the identifier or address information of the first communication device, so that a request message is sent to the first communication device based on different cases. For example, if the first communication device is not reselected, the first request message and/or the third request message may be sent to the first communication device; or if the first communication device is reselected, the second request message may be sent to the first communication device.

Optionally, before performing the second operation, the third communication device may obtain second information, where the second information is used for indicating one of the following: requesting to delete the first association; or requesting to delete the third association. In this way, the third communication device can be triggered, based on the second information, to perform the second operation.

In some embodiments, the third communication device may receive the second information from a UDM, an MME, or the like.

FIG. 5 is a flowchart of an information processing method according to an embodiment of this application. The method is applied to a fourth communication device. For example, the fourth communication device is a network-side device, including but not limited to an AMF and the like. For example, the AMF is an old AMF, and the old AMF is different from a new AMF. The new AMF may be understood as an AMF used after a terminal returns to a second network. The old AMF may be understood as an AMF used before the terminal returns to the second network.

As shown in FIG. 5, the method includes the following step:
Step 51: The fourth communication device receives second notification information.
Step 52: The fourth communication device deletes a first association.

In this embodiment, the second notification information is used for indicating at least one of the following: the terminal has registered with the second network or deleted the first association. The first association is established before the terminal returns from a first network to the second network, and is used for obtaining terminal policy information in the second network, for example, is used for the terminal to obtain terminal policy information in the second network. The first network and the second network are networks with different access modes. This may also be understood as that the first network and the second network are networks with different RATs. For example, the first network is a 4G network, and the second network is a 5G network. However, the first network and the second network are not specifically limited in this embodiment, and specific forms of the first network and the second network can be set provided that a corresponding condition is met.

In some embodiments, the first association is an association between the old AMF and an old AM-PCF (for example, a UE policy association).

In some embodiments, the fourth communication device (for example, the old AMF) may receive the second notification information from a third communication device (for example, the new AMF).

In this way, an association originally established in the second network can be released by deleting the first association, to resolve a problem that a plurality of terminal policy associations exist.

Optionally, the deleting the first association may include: sending, by the fourth communication device, a first request message to a first communication device, where the first request message is used for requesting to delete the first association; and then receiving a second response message sent by the first communication device, where the second response is used for returning a result for the request for deleting the first association.

Optionally, before deleting the first association, the fourth communication device may obtain third information, where the second information is used for indicating one of the following: requesting to delete the first association; requesting to delete a third association; or deregistering the fourth communication device. In this way, the fourth communication device can be triggered, based on the third information, to delete the first association.

In some embodiments, the fourth communication device may receive the third information from a UDM, an MME, or the like.

The following describes an association processing procedure in this application with reference to specific examples.

### Example 1

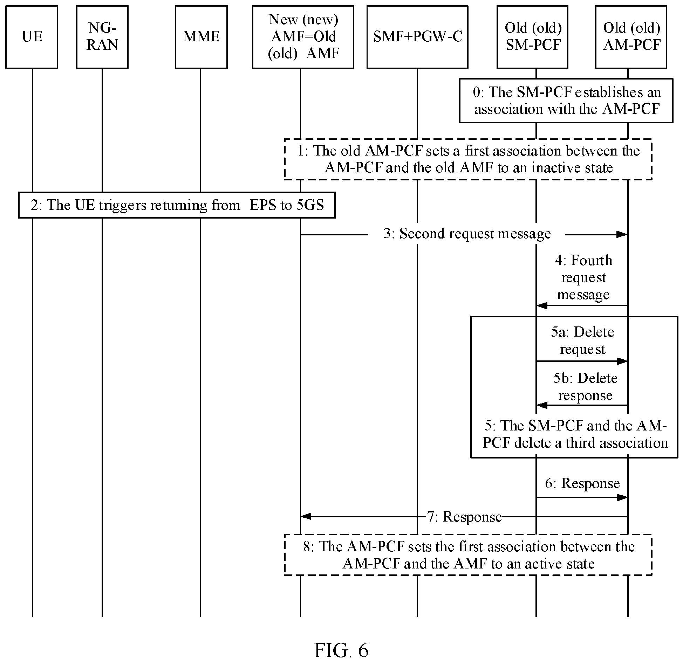

In Example 1, when UE returns from EPS to 5GS, an AM-PCF is not replaced, and an AMF is not replaced either. Example 1 is suitable for a scenario with or without an N26 interface. As shown in FIG. 6, a specific processing procedure includes the following steps:
Step 0: To enable the UE to obtain a URSP in the EPS, an old SM-PCF establishes a third association with an old AM-PCF to provide a URSP in a 4G network. The old SM-PCF and the old AM-PCF may be understood as devices used before the UE returns to 5G.
Step 1: Optionally, the old AM-PCF sets a first association between the old AM-PCF and the AMF to an inactive state. In the inactive state, the AM-PCF does not distribute a terminal policy by using the first association in the inactive state.

In an implementation, when a communication device requests to establish an association (for example, a UE policy association) with the AM-PCF, after successfully establishing an association with the communication device, the AM-PCF sets an established second association to an active state. In an implementation, when a communication device requests to establish an association (for example, a UE policy association) with the AM-PCF, the AM-PCF considers changing the first association in the inactive state to an active state. In an implementation, when setting an association with a communication device for terminal policy distribution to an active state, the AM-PCF may set a previous association for terminal policy distribution to an inactive state.

Step 2: The UE triggers returning from the EPS to the 5GS. A specific process includes: The UE sends a registration request message, an NG-RAN selects an AMF, the AMF obtains a context from an MME, the AMF selects a UDM and performs registration, and the AMF selects a PCF, including an AM-PCF and an SM-PCF.

In Example 1, after the UE returns to the 5GS, the AMF is not replaced, to be specific, the AMF remains the same before and after the UE returns to the 5GS, and a new SM-PCF is the same as the old SM-PCF; and the AM-PCF is not replaced either, to be specific, the AM-PCF remains the same before and after the UE returns to the 5GS, and a new AM-PCF is the same as the old AM-PCF.

Step 3: The AMF sends a second request message (for example, Npcf_UEPolicyControl_Create Request), where the second request message is used for requesting to establish a second association with the AM-PCF, and the second association is used for the UE to obtain a URSP in the 5GS.

Step 4: The AM-PCF sends a fourth request message (for example, Npcf_UEPolicyControl_UpdateNotify Request) based on the second request message in step 3, where the fourth request message is used for requesting to delete or release a third association, and the third association is used for the UE to obtain a URSP in the EPS. Optionally, the fourth request message may carry indication information, and the indication information is used for indicating the SM-PCF to release the third association.

Step 5: The SM-PCF releases the third association between the SM-PCF and the AM-PCF. For example, the third association may be deleted or released by using a delete request (for example, Npcf_UEPolicyControl_Delete Request) and a response (for example, Npcf_UEPolicyControl_Delete Response).

Step 6: Return a response message, for example, Npcf_UEPolicyControl _UpdateNotify Response, for the fourth request message in step 4.

Step 7: Return a response message, for example, Npcf_UEPolicyControl_Create Response, for the second request message in step 3.

Step 8: Optionally, the AM-PCF sets the first association between the AM-PCF and the AMF to an active state.

### Example 2

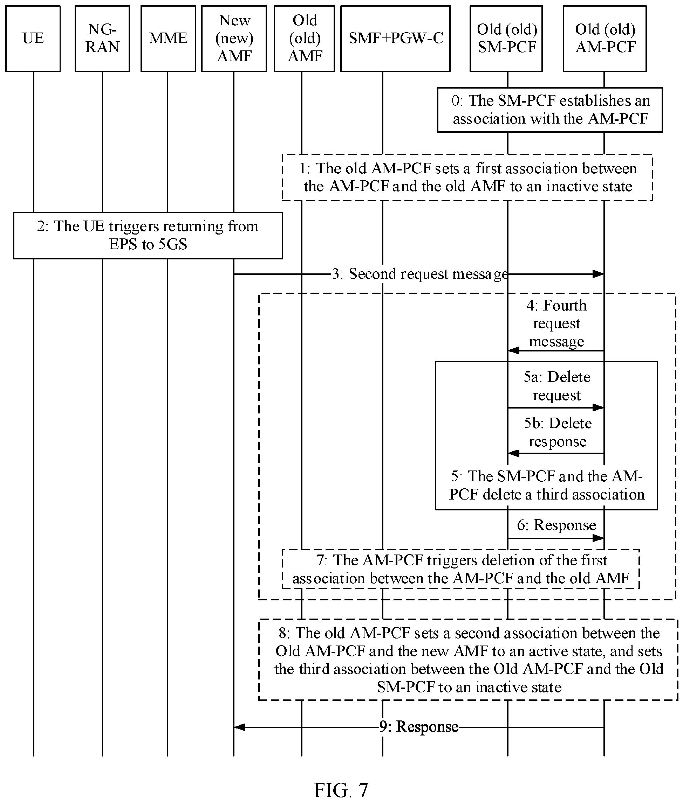

In Example 2, when UE returns from EPS to 5GS, an AM-PCF is not replaced, and an AMF is replaced. The AM-PCF obtains, from a new AMF, a request message for establishing a new association, to trigger release or deactivation of an association. Example 2 is suitable for a scenario with or without an N26 interface. As shown in FIG. 7, a specific processing procedure includes the following steps:
Steps 0 to 2: These steps are the same as steps 0 to 2 in Example 1.
Step 3: The new AMF sends a second request message (for example, Npcf_UEPolicyControl_Create Request), where the second request message is used for requesting to establish a second association with the AM-PCF, and the second association is used for the UE to obtain a URSP in the 5GS.
Step 4: The AM-PCF sends a fourth request message (for example, Npcf_UEPolicyControl _UpdateNotify Request) based on the second request message in step 3, where the fourth request message is used for requesting to delete or release a third association, and the third association is used for the UE to obtain a URSP in the EPS. Optionally, the fourth request message may carry indication information, and the indication information is used for indicating the SM-PCF to release the third association.
Step 5: The SM-PCF releases the third association between the SM-PCF and the AM-PCF. For example, the third association may be released by using a delete request (for example, Npcf_UEPolicyControl_Delete Request) and a response (for example, Npcf_UEPolicyControl_Delete Response).
Step 6: Return a response message, for example, Npcf_UEPolicyControl _UpdateNotify Response, for the fourth request message in step 4.
Step 7: Optionally, the AM-PCF triggers deletion of the first association between the AM-PCF and the old AMF.
Step 8: Optionally, the AM-PCF sets the second association established between the AM-PCF and the new AMF to an active state, and sets the third association between the AM-PCF and the SM-PCF to an inactive state.

It should be noted that, in some implementations, only steps 1 to 3 and steps 8 and 9 may be performed. To be specific, after setting an old association (namely, the third association) to an inactive state, the AM-PCF does not perform an operation of deleting the old association. This is not limited in this solution.

Step 9: Return a response message, for example, Npcf_UEPolicyControl_Create Response, for the second request message in step 3.

### Example 3

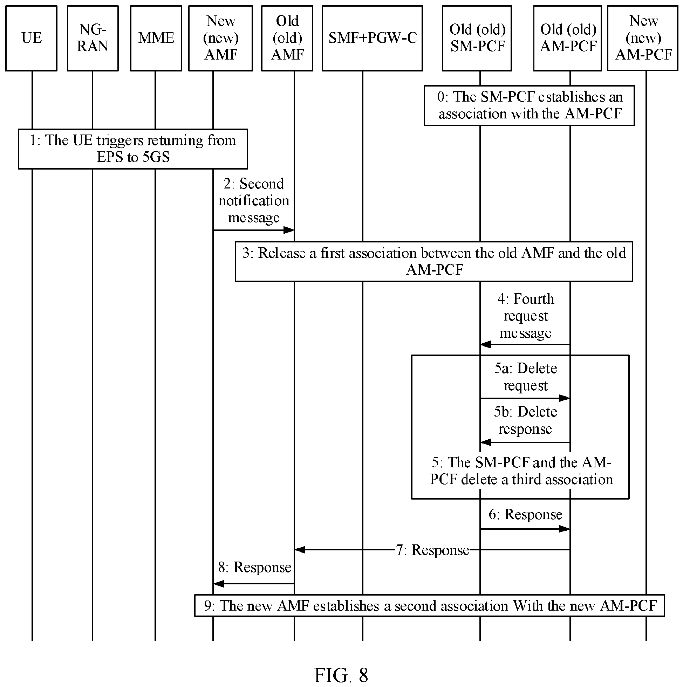

In Example 3, when UE returns from EPS to 5GS, an AM-PCF is replaced, and an AMF is also replaced. A new AMF indicates an old AMF to trigger release of a first association between an old AM-PCF and the old AMF, and the old AM-PCF releases a third association with an old SM-PCF. Example 3 is suitable for a scenario with or without an N26 interface. As shown in FIG. 8, a specific processing procedure includes the following steps:
Steps 0: This step is the same as step 0 in Example 1.
Step 1: The UE triggers returning from the EPS to the 5GS. A specific process includes: The UE sends a registration request message, an NG-RAN selects an AMF, the AMF obtains a context from an MME, the AMF selects a UDM and performs registration, and the AMF selects a PCF, including an AM-PCF and an SM-PCF. In addition, the new AMF may send a context request (Context request) to request to obtain a context from the MME. Optionally, the MME adds index information of the old AMF to a returned context. The index information includes address information, identification information, or the like. In an implementation, the index information of the old AMF is an old AMF ID.
Step 2: The new AMF sends a second notification message based on the index information of the old AMF, where the second notification message is used for indicating one of the following: The UE has registered with the 5GS; or a first association with the AM-PCF is to be released. In an implementation, the second notification message may include indication information, and the indication information indicates one of the following: The UE has registered with the 5GS; or the first association with the AM-PCF is to be released. In an implementation, the new AMF obtains index information of the old AMF based on a UE identifier, where the index information herein is not the index information provided in step 1, but is derived based on the UE identifier provided in step 1.
Step 3: The old AMF releases the first association between the old AMF and the old AM-PCF based on the second notification message in step 2. In an implementation, the old AMF releases the first association between the old AMF and the old AM-PCF by triggering a UE policy association termination procedure.
Step 4: The old AM-PCF sends a fourth request message (for example, Npcf_UEPolicyControl _UpdateNotify Request), where the fourth request message is used for requesting to delete or release a third association, and the third association is used for the UE to obtain a URSP in the EPS. Optionally, the fourth request message may carry indication information, and the indication information is used for indicating the SM-PCF to release the third association.
Step 5: The old SM-PCF releases the third association between the old SM-PCF and the old AM-PCF. For example, the third association may be released by using a delete request (for example, Npcf_UEPolicyControl_Delete Request) and a response (for example, Npcf_UEPolicyControl_Delete Response).
Step 6: Return a response message, for example, Npcf_UEPolicyControl _UpdateNotify Response, for the fourth request message in step 4.
Step 7: Return a response message, for example, Npcf_UEPolicyControl_Delete Response, for step 3.
Step 8: Return a response message for step 2.
Step 9: The new AMF establishes a second association between the new AMF and a new AM-PCF, and sets the second association to an active state, where the second association is used for the UE to obtain a URSP in the 5GS.

### Example 4

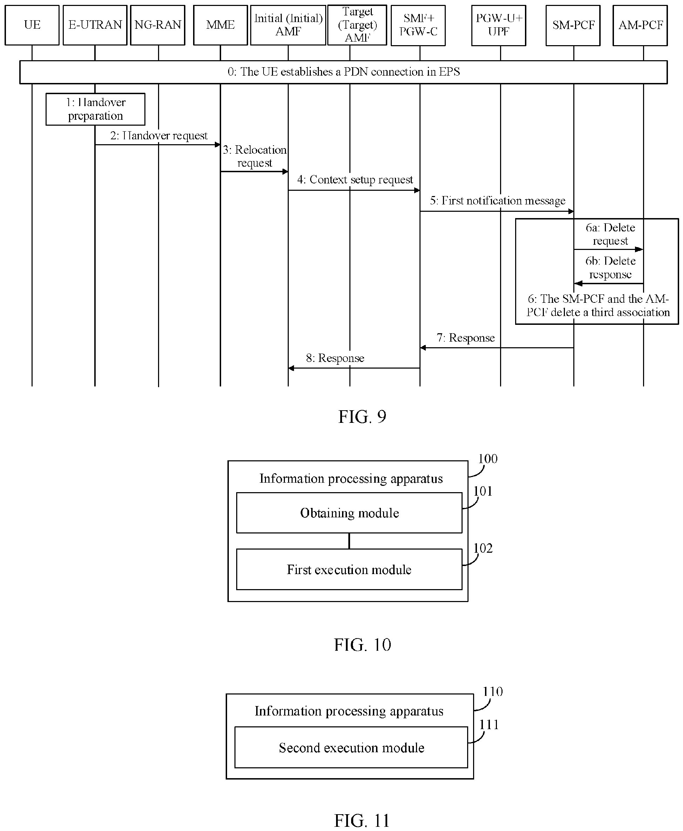

In Example 4, when UE returns from EPS to 5GS and performs an N26 interface-based handover procedure, an SM-PCF triggers release of an association. Example 4 is suitable for a scenario with an N26 interface. As shown in FIG. 9, a specific processing procedure includes the following steps:
Step 0: The UE establishes a PDN connection in the EPS.
Step 1: A network performs a handover preparation procedure.
Step 2: An E-UTRAN sends a handover request (for example, Handover Request) to an MME.
Step 3: The MME sends a relocation request (for example, forward relocation request) to an AMF.
Step 4: The AMF sends a PDU session SM context setup request to an SMF+PGW-C.
Step 5: The SMF sends a first notification message to the SM-PCF based on the PDU session SM context setup request in step 4, where the first notification message is used for indicating the SM-PCF to release a third association with an AM-PCF, and the third association is used for the UE to obtain terminal policy information in the EPS.
Step 6: The SM-PCF releases the third association. For example, the third association may be released by using a delete request (for example, Npcf_UEPolicyControl_Delete Request) and a response (for example, Npcf_UEPolicyControl_Delete Response).
Step 7: Return a response message for the request message in step 5.
Step 8: Return a response message for the request message in step 4.

The information processing method provided in the embodiments of this application may be performed by an information processing apparatus. In the embodiments of this application, an information processing apparatus provided in the embodiments of this application is described by using an example in which the information processing apparatus performs the information processing method.

FIG. 10 is a schematic structural diagram of an information processing apparatus according to an embodiment of this application. The apparatus is applied to a first communication device. As shown in FIG. 10, the information processing apparatus 100 includes:
an obtaining module 101, configured to obtain a request message; and
a first execution module 102, configured to perform, based on the request message, a first operation corresponding to an association, where
the request message includes at least one of the following:
   a first request message related to a first association;
   a second request message related to a second association; and
   a third request message related to a third association, where
   the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

Optionally, in a case that the request message includes the first request message, the first operation includes at least one of the following:
setting the first association to an active state;
accepting establishment or modification of the first association;
deleting the first association, or setting the first association to an inactive state;
sending a fourth request message, where the fourth request message is used for requesting a second communication device to delete the third association, or set the third association to an inactive state; and
sending a first response message, where the first response message is used for returning a result for a request for deleting the first association.

Optionally, in a case that the request message includes the second request message, the first operation includes at least one of the following:
setting an established second association to an active state;
accepting establishment or modification of the second association; and
sending a fourth request message, where the fourth request message is used for requesting a second communication device to delete the third association, or set the third association to an inactive state.

Optionally, in a case that the request message includes the third request message, the first operation includes at least one of the following:
deleting the third association, or setting the third association to an inactive state;
sending a second response message, where the second response message is used for returning a result for a request for deleting the third association; and
sending a fourth request message, where the fourth request message is used for requesting a second communication device to delete the third association, or set the third association to an inactive state.

Optionally, if the first communication device is the same as a fifth communication device and a third communication device associated with the first communication device remains the same before and after the terminal returns from the first network to the second network, the first execution module 102 is configured to perform at least one of the following:
setting the first association to an active state, and/or accepting establishment or modification of the first association; and
sending a fourth request message, where the fourth request message is used for requesting a second communication device to delete the third association, or set the third association to an inactive state, where
the first communication device is a device used before the terminal returns from the first network to the second network, and the fifth communication device is a device used after the terminal returns from the first network to the second network.

Optionally, if the first communication device is the same as a fifth communication device and a third communication device associated with the first communication device varies before and after the terminal returns from the first network to the second network, the first execution module 102 is configured to perform at least one of the following:
deleting the first association, or setting the first association to an inactive state;
setting an established second association to an active state, and/or accepting establishment or modification of the second association; and
sending a fourth request message, where the fourth request message is used for requesting a second communication device to delete the third association, or set the third association to an inactive state, where
the first communication device is a device used before the terminal returns from the first network to the second network, and the fifth communication device is a device used after the terminal returns from the first network to the second network.

Optionally, if the first communication device is different from a sixth communication device, the first execution module 102 is configured to perform at least one of the following:
deleting the first association, or setting the first association to an inactive state; and
sending a fourth request message, where the fourth request message is used for requesting a second communication device to delete the third association, or set the third association to an inactive state, where
the first communication device is a device used before the terminal returns from the first network to the second network, and the sixth communication device is a device used after the terminal returns from the first network to the second network.

Optionally, if the first communication device is different from a seventh communication device, the first execution module 102 is configured to perform the following content:
setting an established second association to an active state, and/or accepting establishment or modification of the second association, where
the first communication device is a device used after the terminal returns from the first network to the second network, and the seventh communication device is a device used before the terminal returns from the first network to the second network.

Optionally, a first terminal policy information identifier (for example, a UE policy association ID) used before the terminal returns from the first network to the second network is the same as a second terminal policy information identifier (for example, a UE policy association ID) used after the terminal returns from the first network to the second network.

The information processing apparatus 100 provided in this embodiment of this application is capable of implementing the processes implemented in the method embodiment of FIG. 2, with the same technical effect achieved. To avoid repetition, details are not described herein again.

FIG. 11 is a schematic structural diagram of an information processing apparatus according to an embodiment of this application. The apparatus is applied to a second communication device. As shown in FIG. 11, the information processing apparatus 110 includes:
a second execution module 111, configured to delete a third association in a case that a first condition is met, where
the first condition includes at least one of the following:
   a terminal returns from a first network to a second network;
   a third communication device triggers a session establishment procedure;
   the third communication device triggers a session modification procedure;
   a session context setup request is obtained;
   first indication information is received, where the first indication information is used for indicating the terminal to perform an N26 interface-based handover procedure;
   a fourth request message is received, where the fourth request message is used for requesting the second communication device to delete the third association, or set the third association to an inactive state; and
   first notification information is received, where the first notification information is used for indicating the second communication device to delete the third association, or set the third association to an inactive state, where
   the third association is established before the terminal returns from the first network to the second network, and is used for obtaining terminal policy information in the first network, and the first network and the second network are networks with different access modes.

Optionally, the second execution module 111 is specifically configured to: send a third request message to the first communication device, where the third request message is used for requesting to delete the third association; and receive a second response message sent by the first communication device, where the second response message is used for returning a result for the request for deleting the third association.

The information processing apparatus 110 provided in this embodiment of this application is capable of implementing the processes implemented in the method embodiment of FIG. 3, with the same technical effect achieved. To avoid repetition, details are not described herein again.

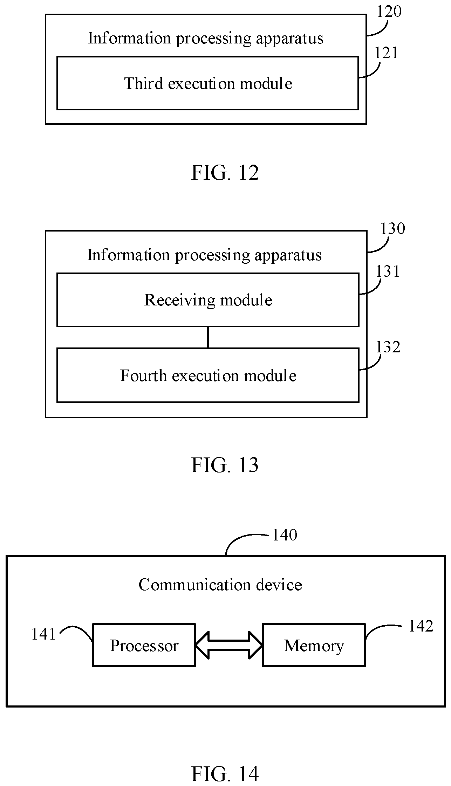

FIG. 12 is a schematic structural diagram of an information processing apparatus according to an embodiment of this application. The apparatus is applied to a third communication device. As shown in FIG. 12, the information processing apparatus 120 includes:
a third execution module 121, configured to perform a second operation, where
the second operation includes at least one of the following:
   sending a first request message, where the first request message is used for requesting at least one of the following: restoring a first association from an inactive state to an active state, or establishing or modifying a first association;
   sending a second request message, where the second request message is used for requesting to establish or modify a second association;
   sending a third request message, where the third request message is used for requesting to delete a third association; and
   sending second notification information, where the second notification information is used for indicating at least one of the following: a terminal has registered with a second network or deleted the first association, where
   the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
   the first network and the second network are networks with different access modes.

Optionally, if the third communication device is the same as an eighth communication device, the third execution module 121 is configured to perform at least one of the following:
sending the first request message;
sending the second request message; and
sending the third request message, where
the third communication device is a device used before the terminal returns from the first network to the second network, and the eighth communication device is a device used after the terminal returns from the first network to the second network.

Optionally, if the third communication device is different from a fourth communication device, the third execution module 121 is configured to send the second notification information to the fourth communication device, where
the third communication device is a device used before the terminal returns from the first network to the second network, and the fourth communication device is a device used after the terminal returns from the first network to the second network.

Optionally, the third execution module 121 is further configured to obtain first information, where the first information includes at least one of the following: an identifier of the first communication device, address information of the first communication device, and a terminal policy information identifier.

Optionally, the third execution module 121 is further configured to obtain second information, where the second information is used for indicating one of the following: requesting to delete the first association; or requesting to delete the third association.

The information processing apparatus 120 provided in this embodiment of this application is capable of implementing the processes implemented in the method embodiment of FIG. 4, with the same technical effect achieved. To avoid repetition, details are not described herein again.

FIG. 13 is a schematic structural diagram of an information processing apparatus according to an embodiment of this application. The apparatus is applied to a fourth communication device. As shown in FIG. 13, the information processing apparatus 130 includes:
a receiving module 131, configured to receive second notification information, where the second notification information is used for indicating at least one of the following: a terminal has registered with a second network or deleted a first association, where the first association is established before the terminal returns from a first network to the second network, and is used for obtaining terminal policy information in the second network, and the first network and the second network are networks with different access modes; and
a fourth execution module 132, configured to delete the first association.

Optionally, the fourth execution module 132 is configured to: send a first request message to a first communication device, where the first request message is used for requesting to delete the first association; and receive a second response message sent by the first communication device, where the second response is used for returning a result for the request for deleting the first association.

Optionally, the fourth execution module 132 is further configured to obtain third information, where the third information is used for indicating one of the following: requesting to delete the first association; requesting to delete the third association; or deregistering the fourth communication device.

The information processing apparatus 130 provided in this embodiment of this application is capable of implementing the processes implemented in the method embodiment of FIG. 5, with the same technical effect achieved. To avoid repetition, details are not described herein again.

Optionally, as shown in FIG. 14, an embodiment of this application further provides a communication device 140, including a processor 141 and a memory 142. The memory 142 stores a program or instructions capable of running on the processor 141. When the program or instructions are executed by the processor 141, the steps in the information processing method embodiments are implemented, with the same technical effect achieved. To avoid repetition, details are not described herein again.

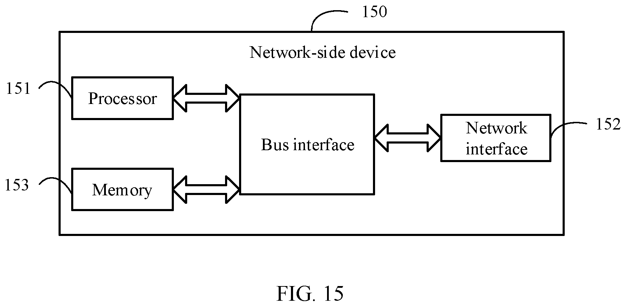

Specifically, an embodiment of this application further provides a network-side device. As shown in FIG. 15, the network-side device 150 includes a processor 151, a network interface 152, and a memory 153. The network interface 152 is, for example, a common public radio interface (common public radio interface, CPRI).

Specifically, the network-side device 150 in this embodiment of the present invention further includes instructions or a program stored in the memory 153 and capable of running on the processor 151, and the processor 151 invokes the instructions or program in the memory 153 to perform the steps in the information processing method embodiments, with the same technical effect achieved. To avoid repetition, details are not described herein again.

An embodiment of this application further provides a readable storage medium. The readable storage medium stores a program or instructions. When the program or instructions are executed by a processor, the processes in the information processing method embodiments are implemented, with the same technical effect achieved. To avoid repetition, details are not described herein again.

The readable storage medium may be a non-volatile readable storage medium or a non-transitory readable storage medium.

The processor is a processor in the terminal in the foregoing embodiments. The readable storage medium includes a computer-readable storage medium, for example, a computer read-only memory ROM, a random access memory RAM, a magnetic disk, or a compact disc.

An embodiment of this application further provides a chip. The chip includes a processor and a communication interface. The communication interface is coupled to the processor. The processor is configured to run a program or instructions to implement the processes in the information processing method embodiments, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the information processing method embodiments, with the same technical effect achieved. To avoid repetition, details are not described herein again.

An embodiment of this application further provides a communication system, including at least two of the following: a first communication device, a second communication device, a third communication device, and a fourth communication device. The first communication device may be configured to perform the steps of the method in FIG. 2. The second communication device may be configured to perform the steps of the method in FIG. 3. The third communication device may be configured to perform the steps of the method in FIG. 4. The fourth communication device may be configured to perform the steps of the method in FIG. 5.

It should be noted that, in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. An information processing method, comprising:
obtaining, by a first communication device, a request message; and
performing, by the first communication device based on the request message, a first operation corresponding to an association, wherein
the request message comprises at least one of the following:
a first request message related to a first association;
a second request message related to a second association; and
a third request message related to a third association, wherein
the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
the first network and the second network are networks with different access modes.

2. The method according to claim 1, wherein in a case that the request message comprises the first request message, the first operation comprises at least one of the following:
setting the first association to an active state;
accepting establishment or modification of the first association;
deleting the first association, or setting the first association to an inactive state;
sending a fourth request message, wherein the fourth request message is used for requesting a second communication device to delete the third association, or set the third association to an inactive state; and
sending a first response message, wherein the first response message is used for returning a result for a request for deleting the first association.

3. The method according to claim 1, wherein in a case that the request message comprises the second request message, the first operation comprises at least one of the following:
setting an established second association to an active state;
accepting establishment or modification of the second association; and
sending a fourth request message, wherein the fourth request message is used for requesting a second communication device to delete the third association, or set the third association to an inactive state.

4. The method according to claim 1, wherein in a case that the request message comprises the third request message, the first operation comprises at least one of the following:
deleting the third association, or setting the third association to an inactive state;
sending a second response message, wherein the second response message is used for returning a result for a request for deleting the third association; and
sending a fourth request message, wherein the fourth request message is used for requesting a second communication device to delete the third association, or set the third association to an inactive state.

5. The method according to claim 1, wherein the performing a first operation corresponding to an association comprises:
if the first communication device is the same as a fifth communication device and a third communication device associated with the first communication device remains the same before and after the terminal returns from the first network to the second network, performing, by the first communication device, at least one of the following:
setting the first association to an active state, and/or accepting establishment or modification of the first association; and
sending a fourth request message, wherein the fourth request message is used for requesting a second communication device to delete the third association, or set the third association to an inactive state, wherein
the first communication device is a device used before the terminal returns from the first network to the second network, and the fifth communication device is a device used after the terminal returns from the first network to the second network.

6. The method according to claim 1, wherein the performing a first operation corresponding to an association comprises:
if the first communication device is the same as a fifth communication device and a third communication device associated with the first communication device varies before and after the terminal returns from the first network to the second network, performing, by the first communication device, at least one of the following:
deleting the first association, or setting the first association to an inactive state;
setting an established second association to an active state, and/or accepting establishment or modification of the second association; and
sending a fourth request message, wherein the fourth request message is used for requesting a second communication device to delete the third association, or set the third association to an inactive state, wherein
the first communication device is a device used before the terminal returns from the first network to the second network, and the fifth communication device is a device used after the terminal returns from the first network to the second network.

7. The method according to claim 1, wherein the performing a first operation corresponding to an association comprises:
if the first communication device is different from a sixth communication device, performing, by the first communication device, at least one of the following:
deleting the first association, or setting the first association to an inactive state; and
sending a fourth request message, wherein the fourth request message is used for requesting a second communication device to delete the third association, or set the third association to an inactive state, wherein
the first communication device is a device used before the terminal returns from the first network to the second network, and the sixth communication device is a device used after the terminal returns from the first network to the second network.

8. The method according to claim 1, wherein the performing a first operation corresponding to an association comprises:
if the first communication device is different from a seventh communication device, performing, by the first communication device, the following content:
setting an established second association to an active state, and/or accepting establishment or modification of the second association, wherein
the first communication device is a device used after the terminal returns from the first network to the second network, and the seventh communication device is a device used before the terminal returns from the first network to the second network.

9. The method according to claim 1, wherein a first terminal policy information identifier used before the terminal returns from the first network to the second network is the same as a second terminal policy information identifier used after the terminal returns from the first network to the second network.

10. An information processing method, comprising:
in a case that a first condition is met, deleting, by a second communication device, a third association, wherein
the first condition comprises at least one of the following:
a terminal returns from a first network to a second network;
a third communication device triggers a session establishment procedure;
the third communication device triggers a session modification procedure;
a session context setup request is obtained;
first indication information is received, wherein the first indication information is used for indicating the terminal to perform an N26 interface-based handover procedure;
a fourth request message is received, wherein the fourth request message is used for requesting the second communication device to delete the third association, or set the third association to an inactive state; and
first notification information is received, wherein the first notification information is used for indicating the second communication device to delete the third association, or set the third association to an inactive state, wherein
the third association is established before the terminal returns from the first network to the second network, and is used for obtaining terminal policy information in the first network, and the first network and the second network are networks with different access modes.

11. The method according to claim 10, wherein the deleting a third association comprises:
sending, by the second communication device, a third request message to a first communication device, wherein the third request message is used for requesting to delete the third association; and
receiving, by the second communication device, a second response message sent by the first communication device, wherein the second response message is used for returning a result for the request for deleting the third association.

12. An information processing method, comprising:
performing, by a third communication device, a second operation, wherein
the second operation comprises at least one of the following:
sending a first request message, wherein the first request message is used for requesting at least one of the following: restoring a first association from an inactive state to an active state, or establishing or modifying a first association;
sending a second request message, wherein the second request message is used for requesting to establish or modify a second association;
sending a third request message, wherein the third request message is used for requesting to delete a third association; and
sending second notification information, wherein the second notification information is used for indicating at least one of the following: a terminal has registered with a second network or deleted the first association, wherein
the first association is established before the terminal returns from a first network to the second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
the first network and the second network are networks with different access modes.

13. The method according to claim 12, wherein the performing a second operation comprises:
if the third communication device is the same as an eighth communication device, performing, by the third communication device, at least one of the following:
sending the first request message;
sending the second request message; and
sending the third request message, wherein
the third communication device is a device used before the terminal returns from the first network to the second network, and the eighth communication device is a device used after the terminal returns from the first network to the second network.

14. The method according to claim 12, wherein the performing a second operation comprises:
if the third communication device is different from a fourth communication device, sending, by the third communication device, the second notification information to the fourth communication device, wherein
the third communication device is a device used before the terminal returns from the first network to the second network, and the fourth communication device is a device used after the terminal returns from the first network to the second network.

15. The method according to claim 12, wherein before the performing a second operation, the method further comprises:
obtaining, by the third communication device, first information, wherein the first information comprises at least one of the following: an identifier of the first communication device, address information of the first communication device, and a terminal policy information identifier.

16. The method according to claim 12, wherein before the performing a second operation, the method further comprises:
obtaining, by the third communication device, second information, wherein the second information is used for indicating one of the following: requesting to delete the first association; or requesting to delete the third association.

17. An information processing method, comprising:
receiving, by a fourth communication device, second notification information, wherein the second notification information is used for indicating at least one of the following: a terminal has registered with a second network or deleted a first association, wherein the first association is established before the terminal returns from a first network to the second network, and is used for obtaining terminal policy information in the second network, and the first network and the second network are networks with different access modes; and
deleting, by the fourth communication device, the first association.

18. The method according to claim 17, wherein the deleting the first association comprises:
sending, by the fourth communication device, a first request message to a first communication device, wherein the first request message is used for requesting to delete the first association; and
receiving, by the fourth communication device, a second response message sent by the first communication device, wherein the second response is used for returning a result for the request for deleting the first association.

19. The method according to claim 17, wherein before the deleting the first association, the method further comprises:
obtaining, by the fourth communication device, third information, wherein the third information is used for indicating one of the following: requesting to delete the first association; requesting to delete a third association; or deregistering the fourth communication device.

20. An information processing apparatus, comprising:
an obtaining module, configured to obtain a request message; and
a first execution module, configured to perform, based on the request message, a first operation corresponding to an association, wherein
the request message comprises at least one of the following:
a first request message related to a first association;
a second request message related to a second association; and
a third request message related to a third association, wherein
the first association is established before a terminal returns from a first network to a second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
the first network and the second network are networks with different access modes.

21. An information processing apparatus, comprising:
a second execution module, configured to delete a third association in a case that a first condition is met, wherein
the first condition comprises at least one of the following:
a terminal returns from a first network to a second network;
a third communication device triggers a session establishment procedure;
the third communication device triggers a session modification procedure;
a session context setup request is obtained;
first indication information is received, wherein the first indication information is used for indicating the terminal to perform an N26 interface-based handover procedure;
a fourth request message is received, wherein the fourth request message is used for requesting the second communication device to delete the third association, or set the third association to an inactive state; and
first notification information is received, wherein the first notification information is used for indicating the second communication device to delete the third association, or set the third association to an inactive state, wherein
the third association is established before the terminal returns from the first network to the second network, and is used for obtaining terminal policy information in the first network, and the first network and the second network are networks with different access modes.

22. An information processing apparatus, comprising:
a third execution module, configured to perform a second operation, wherein
the second operation comprises at least one of the following:
sending a first request message, wherein the first request message is used for requesting at least one of the following: restoring a first association from an inactive state to an active state, or establishing or modifying a first association;
sending a second request message, wherein the second request message is used for requesting to establish or modify a second association;
sending a third request message, wherein the third request message is used for requesting to delete a third association; and
sending second notification information, wherein the second notification information is used for indicating at least one of the following: a terminal has registered with a second network or deleted the first association, wherein
the first association is established before the terminal returns from a first network to the second network, and is used for obtaining terminal policy information in the second network; the second association is established after the terminal returns from the first network to the second network, and is used for obtaining terminal policy information in the second network; and the third association is established before the terminal returns from the first network to the second network, and is used for obtaining terminal policy information in the first network; and
the first network and the second network are networks with different access modes.

23. An information processing apparatus, comprising:
a receiving module, configured to receive second notification information, wherein the second notification information is used for indicating at least one of the following: a terminal has registered with a second network or deleted a first association, wherein the first association is established before the terminal returns from a first network to the second network, and is used for obtaining terminal policy information in the second network, and the first network and the second network are networks with different access modes; and
a fourth execution module, configured to delete the first association.

24. A communication device, comprising a processor and a memory, wherein the memory stores a program or instructions capable of running on the processor, and when the program or instructions are executed by the processor, the steps of the information processing method according to any one of claims 1 to 9 are implemented, or the steps of the information processing method according to claim 10 or 11 are implemented, or the steps of the information processing method according to any one of claims 12 to 16 are implemented, or the steps of the information processing method according to any one of claims 17 to 19 are implemented.

25. A readable storage medium, wherein the readable storage medium stores a program or instructions, and when the program or instructions are executed by a processor, the steps of the information processing method according to any one of claims 1 to 9 are implemented, or the steps of the information processing method according to claim 10 or 11 are implemented, or the steps of the information processing method according to any one of claims 12 to 16 are implemented, or the steps of the information processing method according to any one of claims 17 to 19 are implemented.
